# EUROPÄISCHE PATENTSCHRIFT

(11) **EP 2 143 593 B1**
(45) Veröffentlichungstag und Bekanntmachung des Hinweises auf die Patenterteilung: **09.10.2013**
(21) Anmeldenummer: 09100279.0
(22) Anmeldetag: 12.05.2009
(51) Int. Cl.: B60R 21/013, G01P 15/00, G01P 15/18

(54) **Rückhaltemittelsteuerung für ein Steuergerät**
Retention control for a control device
Commande de moyen de retenue pour un appareil de commande

(30) Priorität: 10.07.2008 DE 102008040315
(43) Veröffentlichungstag der Anmeldung: 13.01.2010
(73) Patentinhaber: ROBERT BOSCH GMBH, 70442 Stuttgart (DE)
(72) Erfinder: Breu, Andreas, 97199 Ochsenfurt-Gossmannsdorf (DE); Schumacher, Hartmut, 71691 Freiberg (DE); Roos, Bernd, 74223 Flein (DE); Steinkogler, Sascha, 79106 Freiburg (DE); Maier, Ralf, 70839 Gerlingen (DE)

(56) Entgegenhaltungen:
- WO-A1-2004/101326
- DE-A1- 19 719 780
- DE-A1-102004 056 415

## Beschreibung

### Stand der Technik

Die vorliegende Erfindung bezieht sich auf eine Rückhaltemittelsteuerung für ein Steuergerät gemäß Anspruch 1 und ein Steuergerät gemäß Anspruch 13.

### Beschreibung der Erfindung

Aus der DE 10 2004 056 415 A1 ist ein hochintegriertes System-ASIC bekannt, das verschiedene Funktionen, die für die Steuerung von Rückhaltemitteln benötigt werden, monolithisch integriert auf einem Baustein enthält. Insbesondere integriert der ASIC eine Energieversorgung, Zündendstufen, eine Kommunikationsschnittstelle wie beispielsweise CAN oder K-Line, Watchdogs zur Überwachung eines Mikrokontrollers, eine Überwachung der Crashsignalwerte, eine Schalterauswertung sowie Schnittstellen zu peripheren Crashsensoren. Der Baustein wird einzeln in einem IC-Gehäuse mit einer hohen Anzahl von Pins verpackt.

Neben den von dem ASIC bereitgestellten Funktionen sind für ein Rückhallesystem ein Beschleunigungssensor und ein Mikrokontroller (µC) erforderlich.

Die DE 197 19 780 A1 offenbart eine Beschleunigungserfassungseinrichtung mit einem auf einem Substrat aufgebrachten, eine Dreh rate erfassenden Drehratensensor, der eine zumindest eine auslenkbare seismische Masse umfassende Schwingstruktur aufweist, und einen eine Linearbeschleunigung erfassenden Beschleunigungssensor, der zumindest eine weitere seismische Masse aufweist, die an Biegeelementen auslenkbar aufgehängt ist, wobei die seismischen Massen der beiden Sensoren unabhängig voneinander auslenkbar sind.

DE 197 19 780 A1 beschreit weiterhin eine Rückhaltemittelsteuerung für ein Steuergerät, mit folgenden Merkmalen: einem Chipgehäuse; einem mikromechanischen Sensor, der in dem Chipgehäuse angeordnet ist, einer integrierten Schaltung zum Bereitstellen von Funktionen für ein Rückhaltemittel, wobei die integrierte Schaltung in dem Chipgehäuse angeordnet ist.

Die WO 2004/101326 A1 offenbart ein Verfahren und eine Vorrichtungen zur Übertragung von Daten zwischen einem zentralen Steuergerät eines Insassenschutzsystems in einem Fahrzeug und mindestens einer dezentralen Sensoreinheit. Diese Schrift offenbart ferner ein Verfahren und dazu geeignete Vorrichtungen zur Übertragung von Daten zwischen einem zentralen Steuergerät eines Insassenschutzsystems in einem Fahrzeug und mindestens einer dezentralen Sensoreinheit. Die Sensoreinheit umfasst einen Sensor und wird in einem Normalbetriebsmodus oder in einem Testbetriebsmodus betrieben, wobei im Normalbetriebsmodus die übermittelten Daten Sensormessdaten beinhalten, wohingegen sie im Testbetriebsmodus Kenndaten beinhalten. Die Sensoreinheit sendet ihre Datenpakete in beiden Betriebsmodi nach einem zuletzt erkannten Synochronisationspuls und fügt den Datenpaketen je nach Betriebsmodus ein unterschiedliches Kennzeichen durch Hinzufügen mindestens einen Datenbits bei, so dass die Datenpakete des Normalbetriebsmodus und des Testbetriebsmodus anhand des jeweiligen Kennzeichens eindeutig voneinander unterschieden werden können.

Die DE 10 2004 056415 A1 offenbart einen integrierten Schaltkreis mit einem Gehäuse in einem Steuergerät vorgeschlagen, der wenigstens zwei Spannungspegel bereitstellt, einen Watchdog zur Überwachung eines Prozessors aufweist, eine Bewertung von wenigstens einem Beschleunigungssignal zur Freigabe von wenigstens einer Zündendstufe durchführt und wenigstens eine erste Schnittstelle zur Anbindung von wenigstens einem außerhalb des Steuergeräts angeordneten Sensor aufweist.

Die vorliegende Erfindung schafft eine Rückhaltemittelsteuerung für ein Steuergerät gemäß Anspruch 1 und ein Steuergerät gemäß Anspruch 13. Vorteilhafte Ausgestaltungen der Erfindung sind Gegenstand der Unteransprüche.

Die Erfindung basiert auf der Erkenntnis, dass die Halbleitertechnik eine höhere Integration bisheriger Rückhaltemittelsteuerungen ermöglicht. Durch eine monolitische Integration zusätzlicher Funktionen der Rückhaltemittelsteuerung in einen Baustein ergibt sich eine erhöhte Resistenz gegenüber externen Störungen und eine Kosteneinsparung. Erfindungsgemäß können trotzdem einzelne Funktionsblöcke der Rückhaltemittelsteuerung als separate Bausteine ausgeführt sein und als sogenanntes System-in-Package in erhöhte Resistenz gegenüber externen Störungen und eine Kosteneinsparung. Erfindungsgemäß können trotzdem einzelne Funktionsblöcke der Rückhaltemittelsteuerung als separate Bausteine ausgeführt sein und als sogenanntes System-in-Package in einem Gehäuse angeordnet werden. Dadurch kann für jeden Funktionsblock eine optimale Technologie eingesetzt werden. Trotzdem wird nur wenig Leiterplattenfläche benötigt. Dies ermöglicht eine einfache Integration der erfindungsgemäßen Rückhaltemittelsteuerung in ein Airbagsteuergerät oder ein anderes Steuergerät im Kfz. Die Erfindung zielt insbesondere auf die Steuerung von Rückhaltemitteln, die mit standardisierten Zündströmen ausgelöst werden. Beispiele für solche Rückhaltemittel sind Airbags und pyrotechnische Gurtstraffer sowie Gurtkraftbegrenzer.

Der Kern der Erfindung liegt in der Verbindung eines mikromechanischen Sensorelements und einer sehr großen integrierten Schaltung (IC), die alle benötigen Funktionsblöcke zusammenfasst. So bildet die integrierte Schaltung einen System-Kontroller aus, auf dem sowohl ein Haupt-Mikrokontroller (µC) als auch der eine Mikrokontrollerüberwachung und redundante Systemüberwachung (SCON) angeordnet ist. Der System-Kontroller kann Schaltungen unterschiedlichster Ausprägung aufweisen. Beispiele für solche Schaltungen sind Endstufen, die aus Leistungstransitoren bestehen, dicht-gepackte Logikschaltungen oder nicht-flüchtige Speicher des µCs.

Die vorliegende Erfindung schafft eine Rückhaltemittelsteuerung für ein Steuergerät, mit einem Chipgehäuse; einer integrierten Schaltung zum Bereitstellen von Funktionen für ein Rückhaltemittel, wobei die integrierte Schaltung in dem Chipgehäuse angeordnet ist; und einem mikromechanischen Sensor, der in dem Chipgehäuse angeordnet ist.

Bei dem Rückhaltemittel kann es sich um eine Personenschutzeinrichtung in einem Fahrzeug handeln, die einen Insassen bei einem Crash zurückhält. Die Rückhaltemittelsteuerung kann alle Funktionen bereitstellen, die zur Ansteuerung des Rückhaltemittels erforderlich sind. Die Rückhaltemittelsteuerung ist als System-in-Package ausgebildet. Dabei kann eine Mehrzahl ungehäuster diskreter Bauteile in einem Gehäuse angeordnet werden. Bei den Bauteilen kann es sich um Halbleiter-Chips handeln. Erfindungsgemäß kann die Rückhaltemittelsteuerung ein erstes monolithisches Halbleiterelement, das die integrierte Schaltung bereitstellt, und ein getrennt angeordnetes zweites monolithisches Halbleiterelement aufweisen, das den mikromechanischen Sensor bereitstellt. Somit werden zwei monolithische Halbleiterelemente gemeinsam in dem Chipgehäuse angeordnet. Das System-in-Package stellt eine sehr kompakte, kostengünstige und zuverlässige Partitionierung dar. Alle unverzichtbaren IC-Bausteine der Rückhaltemittelsteuerung sind in einem Gehäuse vereint. Damit werden Elektronik-Stoffkosten und vor allem der Leiterplattenflächenbedarf deutlich reduziert.

Zum Bereitstellen der Funktionen für das Rückhaltemittel kann die integrierte Schaltung mindestens eine Energieversorgung, eine Zündendstufe, eine Kommunikationsschnittstelle, eine Überwachungseinrichtung, eine Auswerteeinrichtung zur Erkennung eines Insassenstatus, eine Schnittstelle zu einem peripheren Crash-Sensor und/oder eine Aufbereitungseinrichtung für Beschleunigungs- und Körperschallsignale eines Sensorelementes aufweisen. Zudem kann die integrierte Schaltung eine Oszillatorschaltung aufweisen. Die Überwachungseinrichtung kann ein mehrstufiges Watchdog-Konzept aufweisen, wie es beispielsweise in der DE 100 56 408 C1 beschrieben ist.

Ferner kann die integrierte Schaltung ausgebildet sein, um eine Konditionierung und/oder Verarbeitung eines Signals des mikromechanischen Sensors durchzuführen. Besonders vorteilhaft ist dabei, dass die Sensorsignalkonditionierung und -verarbeitung monolithisch integriert in dem System-ASIC stattfinden kann.

Der mikromechanische Sensor kann ein Beschleunigungssensor sein. Neben den Funktionen der integrierten Schaltung ist für ein Rückhaltesystem ein ein- oder mehrachsiger Beschleunigungssensor, der den Crash detektiert, unverzichtbar. Vorteilhaft ist, dass die Sensorsignalkonditionierung und -verarbeitung monolithisch integriert in dem System-ASIC stattfinden kann.

Der mikromechanische Sensor kann eine Einrichtung zur Takterzeugung aufweisen. Jede Mikroprozessor-basierte Steuerung benötigt einen Systemtakt, der üblicherweise durch einen separaten Schwingquarz oder einen separaten Keramikresonator erzeugt wird. Somit kann das mikromechanische Sensorelement einen mikromechanischen Oszillator oder Resonator, beispielsweise aus Silizium, zur Takterzeugung enthalten. Damit kann ein separater Quarz oder Keramikresonator entfallen. Vorteilhaft ist die monolithische Integration von Beschleunigungssensorelement und Oszillator in einem Siliziumelement. Auch damit lassen sich Elektronik-Stoffkosten und Leiterplattenflächenbedarf reduzieren.

Gemäß einer Ausgestaltung kann die Rückhaltemittelsteuerung einen Mikrokontroller zum Treffen einer Auslöseentscheidung des Rückhaltemittels aufweisen. Der Mikrokontroller wird für das Rückhaltesystem benötigt. Der Mikrokontroller bestimmt aufgrund der Daten aller Sensoren, ob die Auslösung von Rückhaltemitteln nötig ist. Dazu benötigt er mindestens einen Prozessor, Speicher und Peripheriefunktionen, z.B. I/O Ports. Erfindungsgemäß kann die Mikrokontroller-Funktionalität mit hoher Qualität und geringen Kosten bereitgestellt werden.

Die integrierte Schaltung kann den Mikrokontroller aufweisen. Der Vorteil bei dieser Partitionierung liegt darin, dass die Funktionalität von Mikrokontroller und ASIC optimal aufeinander abgestimmt werden können und die Signale zwischen Mikrokontroller und nur innerhalb eines Chips geführt werden. Dadurch erhöht sich die Resistenz gegenüber externen Störungen. Ein weiterer Vorteil liegt in der Kosteneinsparung durch die monolithische Integration.

Alternativ kann die Rückhaltemittelsteuerung ein drittes monolithisches Halbleiterelement aufweisen, das den Mikrokontroller bereitstellt, wobei das dritte monolithische Halbleiterelement in dem Chipgehäuse angeordnet ist. Durch die Aufnahme des Mikrokontrollers in das Chipgehäuse wird eine weitergehende Integration erreicht. Es ergibt sich ein triple-die System-in-Package. Besonders vorteilhaft bei diesem Ansatz ist, dass der Mikrokontroller hinsichtlich seiner Performance skaliert werden kann. Je nach Umfang und Komplexität des Rückhaltesystems können die Frequenz des Mikrokontrollerkerns, die Speichergrößen und der Umfang der Peripherieelemente variiert werden und die jeweils benötigte Variante in das System-in-Package verbaut werden. Ein weiterer Vorteil dieser Partitionierung ist, dass der Mikrokontroller, der die Auslöseentscheidung trifft, auf einem separaten Silizium-die realisiert ist. Damit lässt sich, zusammen mit dem Safety Controller SCON auf dem System ASIC, die für sicherheitsrelevante Rückhaltesysteme geforderte Zweikanaligkeit des Signalpfades einfach darstellen.

Die Rückhaltemittelsteuerung kann eine Mehrzahl von Verbindungsleitungen zum Bereitstellen einer elektrischen Verbindung zwischen der integrierten Schaltung und dem mikromechanischen Sensor aufweisen.

Gemäß einer Ausgestaltung können das Rückhaltemittel ein Airbag und die Rückhaltemittelsteuerung eine Airbag-Steuergerät sein. Dabei wird wegen der Konzentration der gesamten Funktionalität eines Standard-Airbag Steuergeräts in einem dual-die System-in-Package nur sehr wenig Leiterplattenfläche benötigt.

Die vorliegende Erfindung schafft ferner ein Steuergerät für ein Fahrzeug, in dem eine erfindungsgemäße Rückhaltemittelsteuerung angeordnet ist. Der geringe Platzbedarf der Rückhaltemittelsteuerung ermöglicht die einfache Integration der Rückhaltemittelsteuerung in ein anderes Steuergerät im Kfz.

### Kurze Beschreibung der Zeichnungen

Die Erfindung wird nachstehend anhand der beigefügten Zeichnungen beispielhaft näher erläutert. Es zeigen:
- Fig. 1: ein Blockschaltbild einer erfindungsgemäßen Rückhaltemittelsteuerung;
- Fig. 2: ein Blockschaltbild einer weiteren erfindungsgemäßen Rückhaltemittelsteu- erung;
- Fig. 3: ein Blockschaltbild einer weiteren erfindungsgemäßen Rückhaltemittelsteu- erung; und
- Fig. 4: ein Blockschaltbild einer weiteren erfindungsgemäßen Rückhaltemittelsteu- erung.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

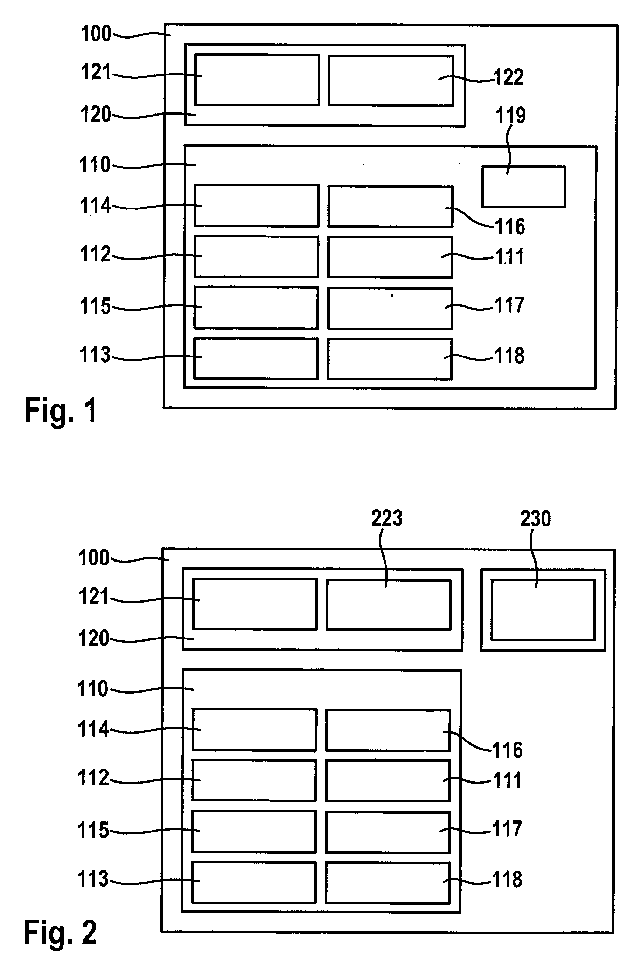

Fig. 1 zeigt ein Blockschaltbild einer Rückhaltemittelsteuerung gemäß einem Ausführungsbeispiel der vorliegenden Erfindung. Die Rückhaltemittelsteuerung ist als 1-IC-Rückhaltemittelsteuerung in Form eines System in Package (SiP) ausgebildet. Die Rückhaltemittelsteuerung weist ein Chipgehäuse 100 auf, in dem eine integrierten Schaltung 110 und ein mikromechanischen Sensor 120 angeordnet sind. Die integrierte Schaltung 110 formt einen System-Kontroller oder System-ASIC aus und ist ausgebildet, um Funktionen für ein Rückhaltemittel bereitzustellen.

Dazu kann die integrierte Schaltung 110 eine Mehrzahl von Schaltungsblöcken aufweisen. Insbesondere kann die integrierte Schaltung 110 eine Energieversorgung "Power" 111, eine oder eine Mehrzahl von Zündendstufen "FLIC" 112, eine oder eine Mehrzahl von Kommunikationsschnittstellen 113, beispielsweise CAN oder K-Line, eine Mikrokontrollerüberwachung und redundante Systemüberwachung 114, in Form eines Safety Controller SCON, eine Auswertung 115 von externen Schaltern zur Erkennung eines Insassenstatus AIO/Ain, eine oder eine Mehrzahl von Schnittstellen oder Interfaces 116 zu peripheren Crash-Sensoren, beispielsweise nach dem PSI5-IF Standard oder ähnlichen Standards, eine Aufbereitung "Sensor Signalprocessing" 117 der Beschleunigungs- und Körperschallsignale eines einkanaligen oder mehrkanaligen Sensorelementes zur Bereitstellung der Messdaten für SCON und einen Mikrokontroller 119 sowie eine Oszillatorschaltung "Oscillator Circuit" 118 eines Silizium-Oszillators mit Temperaturkompensation aufweisen. Der Mikrokontroller 119 dient zur Systemsteuerung und Berechnung der Auslösealgorithmen und ist als Funktionsblock in die integrierte Schaltung 110 integriert.

Der mikromechanischen Sensor 120 weist neben einem Sensorelement 121 einen Oszillator 122 auf. Insbesondere ist der mikromechanische Sensor 120 eine monolithische Integration des Beschleunigungssensorelements "Micromechanical sensing element" 121 und des Oszillators "Micromechanical Oszillator" 122 in einem Siliziumelement.

Gemäß diesem Ausführungsbeispiel ist, anders als beim Stand der Technik in Kfz-Steuergeräten, der Mikrokontroller 119 nicht als ein separater Silizium-Baustein ausgeführt. Der Stand der Halbleitertechnik ermöglicht eine höhere Integration durch die monolithische Integration des Mikrokontrollers 119 als Haupt-Mikrokontroller in das System-ASIC zu einem System-Kontroller in Form der integrierten Schaltung 110. Der Mikrokontroller 119 kann die Auslöseentscheidung für das Rückhaltemittel treffen. Der Safety Controller 114 SCON überwacht nach wie vor die fehlerfreie Funktion des Haupt-Mikrokontrollers 119 und übernimmt zusätzliche Berechnungs- und Überwachungsaufgaben, um die geforderte Zweikanaligkeit von der Sensorik bis zu den Zündendstufen zu gewährleisten.

Kern der Überwachungsfunktion des SCONs ist ein mehrstufiges Watchdog-Konzept, das Systemtakt, Echtzeitprozesse und langsamere Hintergrundprozesse im Mikrokontroller überprüft.

Ein Ausführungsbeispiel besteht aus einem ersten, einem zweiten und einem dritten Watchdog. Der erste Watchdog dient als Kontrollinstanz des Systemtakts. Dazu beinhaltet der SCON eine unabhängige Einheit zur Erzeugung eines Takts, mit dem der Systemtakt verglichen wird. Der zweite und dritte Watchdog sind Logikschaltungen, die den korrekten Programmablauf (richtige Abfolge und Vollständigkeit) im Mikrokontroller überwachen. Dazu werden in einem Handshake-Verfahren Fragen an den Mikrokontroller gestellt und deren korrekte Beantwortung im jeweiligen Zeitfenster für die Echtzeit (Vordergrund) durch den zweiten Watchdog und für den Hintergrund durch den dritten Watchdog kontrolliert. Im Fehlerfall erfolgt eine adäquate Systemreaktion, z.B. Sperrung der Zündendstufen.

Umgekehrt wird der SCON beim Hochfahren des Systems vom Mikrokontroller getestet.

Um unterschiedlichen Anforderungen gerecht zu werden, kann die Rückhaltemittelsteuerung unterschiedliche Stufen von Redundanz aufweisen. So kann die Sensorik, die Signalverarbeitung und/oder die Ansteuerung der Rückhaltemittel 2- oder 3-kanalig ausgebildet sein. Damit der zweite Kanal auch physikalisch unabhängig ist, werden bei der monolithischen Integration halbleitertechnische Maßnahmen ergriffen. Beispielsweise können Guardringe oder Minimalabstände zu anderen Schaltungsblöcken vorgesehen sein.

Beispielsweise kann das Sensorelement 2 kanalig ausgeführt sein, wobei die 2 Kanäle eines Beschleunigungssensors typischerweise rechtwinklig zueinander angeordnet sind. Zusammen mit der Einbaugeometrie ergibt sich dann die geforderte Redundanz. Beispielsweise können die 2 Kanäle so eingebaut werden, dass die Sensierrichtungen für jeden Kanal einen 45°-Winkel zur Fahrtrichtung haben und einen 45°-Winkel zur Fahrzeugquerachse. Damit sind sowohl für den Frontal- als auch für den Seitencrash Signale auf beiden Sensorkanälen vorhanden, die für die Crasherkennung genutzt werden können.

Alternativ kann ein weiterer Sensor außerhalb des System in Package angeordnet werden. In diesem Fall kann die Rückhaltemittelsteuerung eine Schnittstelle zu dem weiteren Sensor aufweisen.

Die Zweikanaligkeit bezüglich der Signalverarbeitung kann den Haupt-Mikrokontoller 119 sowie den Safety Controller 114 SCON betreffen.

Der Hauptmikrokontroller verarbeitet die Signale aller Crashsensoren in spezifischen Algorithmen und sendet dann ggf. die Kommandos zur Aktivierung der Zündendstufen. Parallel dazu bewertet der SCON die Sensorsignale, z.B. im einfachsten Fall durch Vergleich der Sensorwerte mit sensorspezifischen Schwellen. Nur bei einer gleichzeitigen Crashdetektion auf beiden Pfaden werden die Zündendstufen aktiviert.

Die Zweikanaligkeit bezüglich der Ansteuerung der Rückhaltemittel kann die Endstufen im FLIC-Teil 112 betreffen. Beispielsweise durch eine Aufteilung auf zwei Endstufen in Reihe pro Zündkreis und Redundanz mit dem separaten Sicherheitshalbleiter, der als dritter Schalter in der Reihe wirkt.

Das mikromechanische Beschleunigungssensorelement 120 ist ein separater Silizium-Baustein, der zusammen mit dem System-Kontroller 110 ein dual-die System-in-Package bildet. Dadurch lässt sich zu jedem Zeitpunkt die optimale Mikromechanik -Technologie für das Sensorelement und die optimale MixedSignal-ASIC-Technologie für den Systemkontroller einsetzen. Die zwei Elemente können dabei gestapelt oder nebeneinander platziert werden. Fig. 1 zeigt eine nebeneinander liegende Anordnung der Bausteine 110, 120. Die benötigten Verbindungsleitungen können z.B. als Drahtbonds oder über Lotkugeln ausgeführt werden.

Nur ein separater Halbleiter-Baustein im Auslöse-Pfad, ein sogenannter SicherheitsHalbleiter ist zur Erfüllung der Anforderungen nach Redundanz in sicherheitsrelevanten Systemen unter Umständen nötig. Der Sicherheitshalbleiter wird außerhalb des Systemsin-Package angeordnet. Im einfachsten Fall kann es sich bei dem Sicherheitshalbleiter um einen großen (MOS-)Transistor handeln, der vom Haupt-Mikrokontroller und evtl. anderen externen Bauelementen angesteuert wird. Nur im offenen Zustand kann dann der Zündstrom aus der Energiereserve, in Form eines sehr großen Elektrolyt-Kondensators auf der Leiterplatte, durch den Sicherheitshalbleiter in die obere Zündendstufe im FLIC 112 fließen. Von dort fließt der Zündstrom durch die Zündpille und die untere Zündendstufe im FLIC 112 zur Masse GND. Der Sicherheitsleiter ist im Kontext des System-in-Package wichtig, weil viele Autohersteller explizit vorschreiben, dass im Zündpfad zwei getrennte ICs oder zumindest zwei getrennte Halbleiterelemente vorhanden sind.

Fig. 2 zeigt ein Blockschaltbild einer Rückhaltemittelsteuerung gemäß einem weiteren Ausführungsbeispiel der vorliegenden Erfindung. Der zweite Baustein 120 ist eine monolithische Integration von Beschleunigungssensorelement 121 und Oszillator 223 in einem Siliziumelement. Ein weiterer Unterschied besteht darin, dass der Mikrokontroller nicht in die integrierte Schaltung 110 integriert ist sondern als separater Baustein 230 innerhalb des Chipgehäuses 100 angeordnet ist. Der dritte Baustein 230 kann als separates Siliziumelement ausgebildet sein. Alle übrigen Elemente können den in Fig. 1 gezeigten Elementen entsprechen.

Die drei Elemente ASIC 110, Sensor 120 und Mikrokontroller 230 können gestapelt oder nebeneinander platziert werden oder es kann eine Kombination aus beidem verwendet werden. Die benötigten Verbindungsleitungen können z.B. als Drahtbonds oder über Lotkugeln ausgeführt werden.

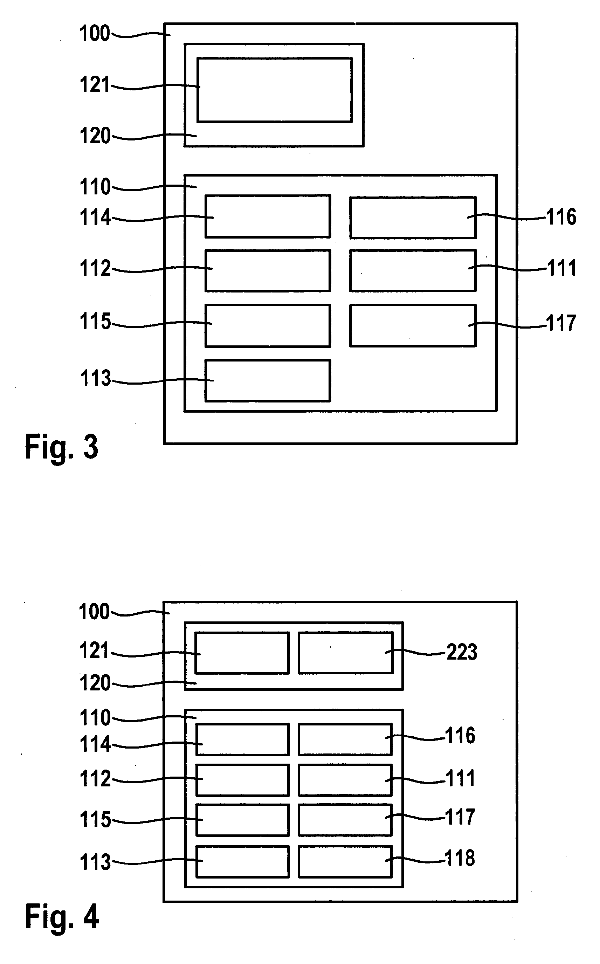

Fig. 3 zeigt ein Blockschaltbild einer Rückhaltemittelsteuerung gemäß einem weiteren Ausführungsbeispiel der vorliegenden Erfindung. Im Unterschied zu dem in Fig. 1 gezeigten Ausführungsbeispiel weist die integrierte Schaltung weder die in Fig. 1 gezeigte Oszillatorschaltung 118 noch den Mikrokontroller 119 auf. Ferner ist der mikromechanische Sensor 120 als ein zweiter Baustein mit einem mikromechanisches Sensorelement 121 ausgebildet, der keine weitere Einrichtung zur Takterzeugung aufweist. Alle übrigen Elemente können den in Fig. 1 gezeigten Elementen entsprechen.

Somit umfasst das dual-die System-in-Package 100 gemäß diesem Ausführungsbeispiel das System-ASIC 110 und als zweiten Baustein 120 das mikromechanische Sensorelement 121. Der Mikrokontroller bleibt bei dieser Partitionierung ein separater Baustein in einem separaten Gehäuse (nicht gezeigt in den Figuren).

Das Sensorelement 120 kann auf verschiedene Weise in das System-in-Package 100 verbaut werden. Es kann auf das System-ASIC 110 gestapelt werden oder daneben platziert werden. Nur wenige Verbindungsleitungen zwischen dem Sensorelement 120 und dem System-ASIC 110 sind nötig. Diese können z.B. als Drahtbonds oder über Lotkugeln als Flip-Chip-Technologie ausgeführt werden.

Fig. 4 zeigt ein Blockschaltbild einer Rückhaltemittelsteuerung gemäß einem weiteren Ausführungsbeispiel der vorliegenden Erfindung. Im Unterschied zu dem in Fig. 3 gezeigten Ausführungsbeispiel weist der mikromechanische Sensor 120 zusätzlich zu dem Sensor 121 einen mikromechanischen Silizium Oszillator "Micromechanical Si Oscillator" 223 auf. Ferner weist die integrierte Schaltung eine Oszillatorschaltung 118 des Silizium-Oszillators mit Temperaturkompensation auf. Der zweite Baustein 120 ist die monolithische Integration von Beschleunigungssensorelement 121 und Oszillator 223 in einem Siliziumelement. Alle übrigen Elemente können den in Fig. 3 gezeigten entsprechen.

Die beschriebenen Ausführungsbeispiele sind nur beispielhaft gewählt und können miteinander kombiniert werden. Die beschriebenen Rückhaltemittelsteuerungen können in Rückhaltesystem-Steuergeräten eines Fahrzeugs eingesetzt werden.

## Patentansprüche

1. Rückhaltemittelsteuerung für ein Steuergerät, mit folgenden Merkmalen:
einem Chipgehäuse (100);
einem mikromechanischen Sensor (120), der in dem Chipgehäuse angeordnet ist,
einem Mikrokontroller (119; 230) zum Treffen einer Auslöseentscheidung des Rückhaltemittels, und
einer integrierten Schaltung (110) zum Bereitstellen von Funktionen für ein Rückhaltemittel, wobei die integrierte Schaltung in dem Chipgehäuse angeordnet ist und ein safety controller (114, SCON) zur Überwachung des Mikrokontrollers (119, 230) aufweist.

2. Rückhaltemittelsteuerung gemäß Anspruch 1, mit einem ersten monolitischen Halbleiterelement, das die integrierten Schaltung (110) bereitstellt und einem getrennt angeordneten zweiten monolitischen Halbleiterelement, das den mikromechanischen Sensor (120) bereitstellt.

3. Rückhaltemittelsteuerung gemäß einem der vorangegangenen Ansprüche, bei der die integrierte Schaltung (110) mindestens eine Energieversorgung (111), eine Zündendstufe (112), eine Kommunikationsschnittstelle (113), eine Auswerteeinrichtung zur Erkennung eines Insassenstatus (115), eine Schnittstelle zu einem peripheren Crash-Sensor (116) und/oder eine Aufbereitungseinrichtung für Beschleunigungs- und Körperschallsignale eines Sensorelementes (117) aufweist.

4. Rückhaltemittelsteuerung gemäß einem der vorangegangenen Ansprüche, bei der die integrierte Schaltung (110) eine Oszillatorschaltung (118) aufweist.

5. Rückhaltemittelsteuerung gemäß einem der vorangegangenen Ansprüche, bei der die integrierte Schaltung (110) ausgebildet ist, um eine Konditionierung und/oder Verarbeitung eines Signals des mikromechanischen Sensors (120) durchzuführen.

6. Rückhaltemittelsteuerung gemäß einem der vorangegangenen Ansprüche, bei der der mikromechanischen Sensor (120) ein Beschleunigungssensor ist, der insbesondere zweikanalig ausgebildet ist, wobei insbesondere zwei Kanäle des Beschleunigungssensors (120) rechtwinklig zueinander angeordnet sind.

7. Rückhaltemittelsteuerung gemäß einem der vorangegangenen Ansprüche, bei der der mikromechanische Sensor (120) eine Einrichtung (122; 223) zur Takterzeugung aufweist.

8. Rückhaltemittelsteuerung gemäß einem der vorangegangenen Ansprüche, bei der die integrierte Schaltung (110) den Mikrokontroller (119) aufweist

9. Rückhaltemittelsteuerung gemäß einem der Ansprüche 1 bis 7, mit einem dritten monolitischen Halbleiterelement das den Mikrokontroller (230) bereitstellt, wobei das dritte monolitische Halbleiterelement in dem Chipgehäuse (100) angeordnet ist.

10. Rückhaltemittelsteuerung gemäß einem der vorangegangenen Ansprüche, mit einer Mehrzahl von Verbindungsleitungen zum Bereitstellen einer elektrischen Verbindung zwischen der integrierten Schaltung (110) und dem mikromechanischen Sensor (120).

11. Rückhaltemittelsteuerung gemäß einem der vorangegangenen Ansprüche, bei der das Rückhaltemittel ein Airbag ist und die Rückhaltemittelsteuerung eine Airbag-Steuergerät ist.

12. Steuergerät für ein Fahrzeug, in dem eine Rückhaltemittelsteuerung gemäß einem der vorangegangenen Ansprüche angeordnet ist.

## Claims

1. Restraint means controller for a control device, having the following features:
a chip housing (100);
a micromechanical sensor (120) which is arranged in the chip housing,
a microcontroller (119; 230) for making a triggering decision of the restraint means, and
an integrated circuit (110) for making available the functions for a restraint means, wherein the integrated circuit is arranged in the chip housing and has a safety controller (114, SCON) for monitoring the microcontroller (119, 230).

2. Restraint means controller according to Claim 1, having a first monolithic semiconductor element which makes available the integrated circuit (110), and a separately arranged, second monolithic semiconductor element which makes available the micromechanical sensor (120).

3. Restraint means controller according to one of the preceding claims, in which the integrated circuit (110) has at least one energy supply (111), an ignition output stage (112), a communication interface (113), an evaluation device for detecting a vehicle occupant status (115), an interface with a peripheral crash sensor (116) and/or a conditioning device for acceleration signals and solid-borne sound signals of a sensor element (117).

4. Restraint means controller according to one of the preceding claims, in which the integrated circuit (110) has an oscillator circuit (118).

5. Restraint means controller according to one of the preceding claims, in which the integrated circuit (110) is designed to carry out conditioning and/or processing of a signal of the micromechanical sensor (110).

6. Restraint means controller according to one of the preceding claims, in which the micromechanical sensor (120) is an acceleration sensor which is, in particular, of two-channel design, wherein, in particular, the two channels of the acceleration sensor (120) are arranged at right angles to one another.

7. Restraint means controller according to one of the preceding claims, in which the micromechanical sensor (120) has a device (122; 223) for generating a clock signal.

8. Restraint means controller according to one of the preceding claims, in which the integrated circuit (110) has the microcontroller (119).

9. Restraint means controller according to one of Claims 1 to 7, having a third monolithic semiconductor element which makes available the microcontroller (230), wherein the third monolithic semiconductor element is arranged in the chip housing (100).

10. Restraint means controller according to one of the preceding claims, having a multiplicity of connecting lines for making available an electrical connection between the integrated circuit (110) and the micromechanical sensor (120).

11. Restraint means controller according to one of the preceding claims, in which the restraint means is an airbag, and the restraint means controller is an airbag control device.

12. Control device for a vehicle in which a restraint means controller according to one of the preceding claims is arranged.

## Revendications

1. Commande de moyens de retenue pour appareil de commande, la commande présentant les caractéristiques suivantes :
un boîtier (100) de puce,
un capteur micromécanique (120) disposé dans le boîtier de puce,
un microcontrôleur (119; 230) qui prend une décision de déclenchement du moyen de retenue et
un circuit intégré (110) qui assure les fonctions d'un moyen de retenue, le circuit intégré étant disposé dans le boîtier de puce et présentant un contrôleur de sécurité (114, SCON) qui surveille le microcontrôleur (119, 230).

2. Commande de moyens de retenue selon la revendication 1, présentant un premier élément semi-conducteur monolithique qui présente le circuit intégré (110) et un deuxième élément semi-conducteur monolithique, disposé séparément du premier, qui présente le capteur micromécanique (120).

3. Commande de moyens de retenue selon l'une des revendications précédentes, dans lequel le circuit intégré (110) présente au moins une alimentation (111) en énergie, un étage final (112) d'allumage, une interface de communication (113), un dispositif d'évaluation qui détecte le statut (115) d'un passager, une interface avec un capteur périphérique de collision (116) et/ou un dispositif qui prépare des signaux d'accélération et de bruit corporel d'un élément de capteur (117).

4. Commande de moyens de retenue selon l'une des revendications précédentes, dans lequel le circuit intégré (110) présente un circuit oscillant (118).

5. Commande de moyens de retenue selon l'une des revendications précédentes, dans lequel le circuit intégré (110) est configuré pour exécuter un conditionnement et/ou un traitement d'un signal du capteur micromécanique (120).

6. Commande de moyens de retenue selon l'une des revendications précédentes, dans lequel le capteur micromécanique (120) est un capteur d'accélération configuré en particulier à deux canaux, deux canaux du capteur d'accélération (120) étant disposés perpendiculairement l'un à l'autre.

7. Commande de moyens de retenue selon l'une des revendications précédentes, dans lequel le capteur micromécanique (120) présente un dispositif (122; 223) qui forme une cadence d'horloge.

8. Commande de moyens de retenue selon l'une des revendications précédentes, dans lequel le circuit intégré (110) présente le microcontrôleur (119).

9. Commande de moyens de retenue selon l'une des revendications 1 à 7, présentant un troisième élément semi-conducteur monolithique qui présente le microcontrôleur (230), le troisième élément semi-conducteur monolithique étant disposé dans le boîtier (100) de puce.

10. Commande de moyens de retenue selon l'une des revendications précédentes, présentant plusieurs conducteurs de raccordement qui assurent le raccordement électrique entre le circuit intégré (110) et le capteur micromécanique (120).

11. Commande de moyens de retenue selon l'une des revendications précédentes, dans lequel le moyen de retenue est un coussin gonflable de sécurité et la commande du moyen de retenue est un appareil de commande de coussin gonflable de sécurité.

12. Appareil de commande pour véhicule, dans lequel une commande de moyen de retenue selon l'une des revendications précédentes est disposée.
